(19) Europäisches Patentamt
European Patent Office
Office européen des brevets

(11) EP 2 796 507 B1

(12) **EUROPEAN PATENT SPECIFICATION**

(45) Date of publication and mention of the grant of the patent:
**27.09.2017 Bulletin 2017/39**

(51) Int Cl.:
***C08L 69/00*** *(2006.01)*

(21) Application number: **13189315.8**

(22) Date of filing: **18.10.2013**

# (54) FLAME RETARDANT THERMOPLASTIC RESIN COMPOSITION AND ARTICLE COMPRISING THE SAME

FLAMMHEMMENDE THERMOPLASTISCHE HARZZUSAMMENSETZUNG UND ARTIKEL DAMIT

COMPOSITION DE RÉSINE THERMOPLASTIQUE IGNIFUGE ET ARTICLE COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2013 KR 20130046334**

(43) Date of publication of application:
**29.10.2014 Bulletin 2014/44**

(73) Proprietor: **Lotte Advanced Materials Co., Ltd.**
**Yeosu-si**
**Jeollanam-do (KR)**

(72) Inventors:
- **Kim, Pil Ho**
  **Gyeonggi-do (KR)**
- **Kim, Ki Uk**
  **Gyeonggi-do (KR)**
- **Kim, Ji Yea**
  **Gyeonggi-do (KR)**
- **Shin, Seung Shik**
  **Gyeonggi-do (KR)**
- **Choi, Dong Kil**
  **Gyeonggi-do (KR)**
- **Han, Dong Hoon**
  **Gyeonggi-do (KR)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**JP-A- 2006 342 199**
**JP-A- 2007 269 821**
**JP-A- 2007 308 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention generally relates to a flame retardant thermoplastic resin composition and an article comprising the same. More particularly, the present invention relates to a flame retardant thermoplastic resin composition, which contains a specific ratio of wollastonite and talc to improve stiffness such as flexural modulus, bending characteristics, and the like, and flame retardancy, and to an article comprising the same.

Polycarbonate resin is an engineering plastic material that has excellent properties in terms of mechanical strength, thermal resistance, transparency, and the like. Polycarbonate resins are used in various fields including office automation devices, electric/electronic components, materials for buildings, and the like. In particular, polycarbonate resins applied to exterior materials of the electric/electronic components such as TVs, monitors, notebook computers and the like, require high fluidity to achieve slim and thin structures of TVs, monitors, notebook computers and the like, as well as flame retardancy and stiffness.

Generally, a rubber modified aromatic vinyl-based copolymer resin has good properties in terms of processibility, impact strength, and external appearance, and is used for electric/electronic products together with the thermoplastic polycarbonate resin. Particularly, flame retardant resins are used to manufacture a device designed to emit heat.

To impart flame retardancy to such a resin composition, a halogen-based flame retardant and an antimony compound or phosphorus compound are used in the art. However, since halogen-based flame-retardants generate toxic gases that are harmful to human health upon combustion, a method for imparting flame retardancy without using a halogen-based compound has attracted attention.

As such a method for imparting flame retardancy, a method of adding a compound containing phosphorus or nitrogen to a resin composition has been studied to impart flame retardancy. In particular, a method of imparting flame retardancy using a phosphorus compound is mainly studied in the art. Among the phosphorus compounds, a phosphoric acid ester compound is generally used as a representative flame retardant; cf. KR 10-2004-0093380 A. However, a resin composition prepared using the phosphoric acid ester compound as the flame retardant can suffer from a "juicing" phenomenon, by which the flame retardant moves to and is deposited on the surface of a molded article during molding, and has significantly reduced thermal resistance. To solve these problems, fillers can be added to the resin composition. However, the use of the fillers results in deterioration of stiffness, particularly, flexural modulus.

Document JP 2007 308529 A discloses a flame-retardant polycarbonate resin composition comprising 0.05-10 parts by weight of an organopolysiloxane modified with an polyalkylene ether having a group derived from at least propylene oxide and/or ethylene oxide, 0.01-20 parts by weight of at least one kind of flame retardant selected from the group consisting of a silicone-based compound except the organopolysiloxane modified with the polyalkylene ether, 0.1-10 parts by weight of an impact modifier and 0.01-5 parts by weight of a fluorine-containing drip inhibitor in 100 parts by weight of an aromatic polycarbonate resin.

Document JP 2006 342199 A discloses a resin composition that comprises 100 parts by weight of the total of 50-99 parts by weight of an aromatic polycarbonate and 1-50 parts by weight of a rubber-reinforced styrene-based resin having 5-90 weight% of rubber component and 0.50-30 parts by weight of the total of (C1) C1 parts by weight of talc and (C2) C2 parts by weight of wallastonite and satisfies a numerical expression of formula (I)

$$0.7 \leq [(C1)/((C1)+(C2))] \leq 0.95 \text{ (I).}$$

Document JP 2007 269821 A discloses a flame-retardant aromatic polycarbonate resin composition comprises 1-30 parts by weight of an organophosphorus type flame retardant and 0.05-2 parts by weight of a fluorine-containing dripping preventive based on the total of 100 parts by weight including 50-99 parts by weight of an aromatic polycarbonate resin and 1-50 parts by weight of a thermoplastic graft copolymer which consists of a diene type rubber component grafted with a vinyl cyanide compound and an aromatic vinyl compound.

Therefore, there is a need for a thermoplastic resin composition which exhibits excellent properties in terms of stiffness, flame retardancy, and the like even when using a phosphorus compound and fillers.

Thus, it is the object of the present invention to overcome said disadvantages of the prior art and to provide a flame retardant thermoplastic resin composition, which can improve flame retardancy without deteriorating stiffness such as flexural modulus, bending characteristics, and the like, and is free from a halogen-based flame retardant to secure eco-friendliness, and an article comprising the same.

This object has been achieved by the finding of a flame retardant thermoplastic resin composition including 100 parts by weight of a polycarbonate resin; 5 parts by weight to 30 parts by weight of a rubber modified aromatic vinyl-based copolymer resin; 10 parts by weight to 30 parts by weight of an aromatic phosphoric acid ester compound; and 5 parts by weight to 100 parts by weight of fillers including wollastonite and talc, wherein a weight ratio of wollastonite to talc ranges from 1:0.1 to 0.5.

In one embodiment, the rubber modified aromatic vinyl group graft copolymer resin may include 10 wt% to 100 wt% of a graft copolymer resin comprising 5 wt% to 65 wt% of a rubbery polymer, 15 wt% to 94 wt% of an aromatic vinyl-based monomer, and 1 wt% to 50 wt% of a monomer copolymerizable with the aromatic vinyl-based monomer; and, optionally, 90 wt% or less of an aromatic vinyl-based copolymer resin comprising 50 wt% to 95 wt% of an aromatic vinyl-based monomer, and 5 wt% to 50 wt% of a monomer copolymerizable with the aromatic vinyl-based monomer.

In one embodiment, the rubber-modified aromatic vinyl-based copolymer resin may include at least one selected from among acrylonitrile-butadiene-styrene copolymer resin (ABS resin), acrylonitrile-ethylene propylene rubber-styrene copolymer resin (AES resin) or acrylonitrile-acryl rubber-styrene copolymer resin (AAS resin).

In one embodiment, the aromatic phosphoric acid ester compound may be represented by Formula 2:

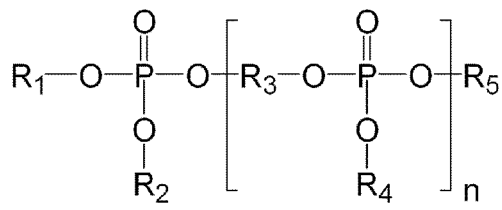,

wherein $R_1$, $R_2$, $R_4$ and $R_5$ are each independently a hydrogen atom, a $C_6$ to $C_{20}$ aryl group, or a $C_1$ to $C_{10}$ alkyl group-substituted $C_6$ to $C_{20}$ aryl group; $R_3$ is a $C_6$ to $C_{20}$ arylene group or a $C_1$ to $C_{10}$ alkyl group-substituted $C_6$ to $C_{20}$ arylene group; and n is an integer from 0 to 4.

In one embodiment, a weight ratio of the aromatic phosphoric acid ester compound to the fillers may range from 1 : 0.2 to 10.

In one embodiment, the flame retardant thermoplastic resin composition may further include at least one type of additive selected from among UV stabilizers, fluorescent brighteners, release agents, nucleating agents, inorganic additives, lubricants, antistatic agents, stabilizers, reinforcing agents, pigments, or dyes.

In one embodiment, the flame retardant thermoplastic resin composition may have a flame retardancy of V-0 or more as measured in accordance with UL-94 vertical testing, a flexural modulus from 35,000 $kgf/cm^2$ to 55,000 $kgf/cm^2$ as measured in accordance with ASTM D790, and a bending degree of 0.01 mm to 1 mm as measured on a specimen obtained by molding the flame retardant thermoplastic resin composition and having a size of 6x6 $in^2$ and a thickness of 1/8" at 25°C and 25% RH.

Another aspect of the present invention relates to a molded article. The molded article comprises the flame retardant thermoplastic resin composition.

Hereinafter, embodiments of the present invention will be described in detail.

In accordance with one embodiment, a flame retardant thermoplastic resin composition includes: (A) 100 parts by weight of a polycarbonate resin; (B) 5 parts by weight to 30 parts by weight of a rubber modified aromatic vinyl-based copolymer resin; (C) 10 parts by weight to 30 parts by weight of an aromatic phosphoric acid ester compound; and (D) 5 parts by weight to 100 parts by weight of fillers including wollastonite and talc, wherein a weight ratio of wollastonite to talc ranges from 1:0.1 to 0.5.

(A) Polycarbonate resin

According to the present invention, the polycarbonate resin is a thermoplastic polycarbonate resin, for example, an aromatic polycarbonate resin prepared by reacting diphenols represented by Formula 1 with phosgene, halogen formate or carbonate diester.

[Formula 1]

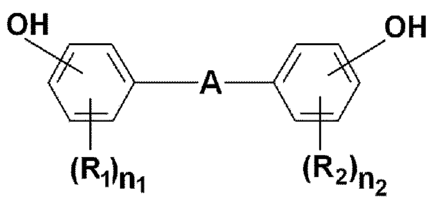,

wherein A is one selected from the group consisting of a single bond, a substituted or unsubstituted $C_1$ to $C_5$ alkylene group, a substituted or unsubstituted $C_2$ to $C_5$ alkylidene group, a substituted or unsubstituted $C_3$ to $C_6$ cycloalkylene

group, a substituted or unsubstituted $C_5$ to $C_6$ cycloalkylidene group, -CO-, -S-, and -$SO_2$-; $R_1$ and $R_2$ are each independently one selected from the group consisting of a substituted or unsubstituted $C_1$ to $C_{30}$ alkyl group, and a substituted or unsubstituted $C_6$ to $C_{30}$ aryl group; and n1 and n2 are each independently an integer from 0 to 4.

As used herein, the term "substituted" means that a hydrogen atom of a compound is substituted by a substituent selected from the group consisting of a halogen group, a $C_1$ to $C_{30}$ alkyl group, a $C_1$ to $C_{30}$ haloalkyl group, a $C_6$ to $C_{30}$ aryl group, a $C_2$ to $C_{30}$ heteroaryl group, a $C_1$ to $C_{20}$ alkoxy group, and combinations thereof.

Examples of diphenols may include 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, 2,2-bis-(3,5-dichloro-4-hydroxyphenyl)-propane, and the like. For example, 2,2-bis-(4-hydroxyphenyl)-propane, 2,2-bis-(3,5-dichloro-4-hydroxyphenyl)-propane, or 1,1-bis-(4-hydroxyphenyl)-cyclohexane may be used as the diphenols compound. Specifically, 2,2-bis-(4-hydroxyphenyl)-propane (also referred to as "bisphenol-A") may be used.

The polycarbonate resin may have a weight average molecular weight (Mw) from 10,000 g/mol to 200,000 g/mol, for example, from 15,000 g/mol to 80,000 g/mol, without being limited thereto.

The polycarbonate resin may be a branched polycarbonate resin, and may be prepared by, for example, adding, 0.05 mol% to 2 mol% of a tri or greater polyfunctional compound, for example, a compound having a tri- or greater valent phenol group, relative to the total amount of the diphenols used for polymerization.

The polycarbonate resin may be used in the form of a homopolycarbonate resin, a copolycarbonate resin or blends thereof.

In addition, the polycarbonate resin may be partially or completely replaced by an aromatic polyester-carbonate resin that is obtained by polymerization in the presence of an ester precursor, for example, bi-functional carboxylic acid.

(B) Rubber modified aromatic vinyl-based copolymer resin

In the invention, the rubber modified aromatic vinyl-based copolymer resin is a polymer wherein a rubbery polymer is dispersed in particle form in a matrix (continuous phase) consisting of an aromatic vinyl-based polymer. For example, the rubber modified aromatic vinyl-based copolymer resin (B) may be prepared by adding an aromatic vinyl-based monomer and a monomer copolymerizable with the aromatic vinyl-based monomer to the rubbery polymer for polymerization.

The rubber modified aromatic vinyl-based copolymer resin may be prepared by emulsion polymerization, suspension polymerization, bulk polymerization, and the like. Typically, the rubber modified aromatic vinyl-based group copolymer resin may be prepared using a (B1) graft copolymer resin alone, or using both (B1) a graft copolymer resin and (B2) an aromatic vinyl-based copolymer resin through, for example, mixing and extrusion. Here, when mixing the (B1) graft copolymer resin and the (B2) aromatic vinyl-based copolymer resin, it is desirable that these resins be mixed in consideration of compatibility. In addition, for bulk polymerization, the rubber modified aromatic vinyl-based copolymer resin may be prepared through single-stage process instead of separately preparing the graft copolymer resin and the aromatic vinyl-based copolymer resin. In either case, the rubbery polymer is preferably present in an amount of 5 wt% to 50 wt% in a final rubber modified aromatic vinyl-based copolymer resin. Further, the rubbery polymer has a Z-average particle size of 0.05 μm to 6.0 μm. Within this range, the resin composition exhibits excellent impact resistance.

(B1) Graft copolymer resin

In the present invention, the graft copolymer resin may be obtained through graft copolymerization of the aromatic vinyl-based monomer and the monomer copolymerizable with the aromatic vinyl-based monomer to the rubbery polymer, and may further include a monomer for imparting processibility and heat resistance, as needed.

Examples of the rubbery polymer may include diene rubbers such as polybutadiene, poly(styrene-butadiene), and poly(acrylonitrile-butadiene); acrylic rubbers such as saturated rubbers produced by adding hydrogen to diene rubbers, isoprene rubbers, and poly(butyl acrylate); ethylene/propylene/diene terpolymer (EPDM), and the like. For example, diene rubbers, specifically, butadiene rubber, may be used. The rubbery polymer may be present in an amount of 5 wt% to 65 wt%, for example, 10 wt% to 60 wt%, specifically, 20 wt% to 50 wt%, relative to the total amount of the (B1) graft copolymer resin. Within this content range, it is possible to obtain an excellent balance between impact resistance and mechanical properties. The rubbery polymer (rubber particles) may have a Z-average particle size from 0.05 μm to 6 μm, for example from 0.15 μm to 4 μm, specifically from 0.25 μm to 3.5 μm. Within this range, the resin composition can provide excellent impact strength and external appearance.

The aromatic vinyl-based monomer may be graft copolymerizable with the rubbery copolymer, for example, styrene, α-methylstyrene, β-methylstyrene, p-methylstyrene, para-t-butylstyrene, ethylstyrene, vinylxylene, monochlorostyrene, dichlorostyrene, dibromostyrene, vinyl naphthalene, and the like, without being limited thereto. Specifically, styrene may be used. The aromatic vinyl-based monomer is present in an amount of 15 wt% to 94 wt%, for example, 20 wt% to 80 wt%, specifically, 30 wt% to 60 wt%, relative to the total amount of the (B1) graft copolymer resin. Within

this range, the resin composition can exhibit an excellent balance between impact resistance and mechanical properties.

The monomer copolymerizable with the aromatic vinyl-based monomer may be, for example, cyanated vinyl-based compounds such as acrylonitrile, unsaturated nitrile compounds such as ethacrylonitrile, methacrylonitrile and the like. These monomers may be used alone or in combination thereof. The monomer copolymerizable with the aromatic vinyl-based monomer may be present in an amount of 1 wt% to 50 wt%, for example 5 wt% to 45 wt%, specifically 10 wt% to 30 wt%, relative to the total amount of the graft copolymer resin. Within this range, the resin composition can exhibit an excellent balance between impact resistance and mechanical properties.

Examples of the monomer for imparting processibility and heat resistance may include acrylic acid, methacrylic acid, maleic acid anhydride, N-substituted maleimide, and the like, without being limited thereto. The monomer for imparting processibility and heat resistance may optionally be present in an amount of 15 wt% or less, for example, 0.1 wt% to 10 wt%, relative to the total amount of the graft copolymer resin. Within this content range, the monomer can impart processibility and heat resistance to the resin composition without deteriorating other properties.

(B2) Aromatic vinyl-based copolymer resin

In the present invention, the aromatic vinyl-based copolymer resin may be prepared from a mixture of the monomers of the (B1) graft copolymer resin (B1), and in this case, the ratio of the monomers can be changed according to compatibility. For example, the aromatic vinyl-based copolymer resin may be obtained by copolymerization of the aromatic vinyl-based monomer and a monomer copolymerizable with the aromatic vinyl-based monomer.

Examples of the aromatic vinyl-based monomer may include styrene, $\alpha$-methylstyrene, $\beta$-methylstyrene, p-methylstyrene, p-t-butylstyrene, ethylstyrene, vinylxylene, monochlorostyrene, dichlorostyrene, dibromostyrene, vinylnaphthalene, and the like, without being limited thereto. Specifically, styrene may be used as the aromatic vinyl-based monomer.

Further, the monomer copolymerizable with the aromatic vinyl-based monomer may be, for example, cyanated vinyl-based compounds such as acrylonitrile, unsaturated nitrile compounds such as ethacrylonitrile, methacrylonitrile and the like. These monomers may be used alone or in combination thereof.

The aromatic vinyl-based copolymer resin may further include a monomer for imparting processibility and heat resistance, as needed. The monomer for imparting processibility and heat resistance may include, for example, acrylic acid, methacrylic acid, maleic acid anhydride, N-substituted maleimide, and the like, without being limited thereto.

In the aromatic vinyl-based copolymer resin, the aromatic vinyl-based monomer may be present in an amount of 50 wt% to 95 wt%, for example, 60 wt% to 90 wt%, specifically, 70 wt% to 80 wt%. Within this range, the resin composition can exhibit excellent balance between impact resistance and mechanical properties.

In the aromatic vinyl-based copolymer resin, the monomer copolymerizable with the aromatic vinyl-based monomer may be present in an amount of 5 wt% to 50 wt%, for example, 10 wt% to 40 wt%, specifically, 20 wt% to 30 wt%. Within this range, the resin composition can exhibit an excellent balance between impact resistance and mechanical properties.

In addition, the monomer for imparting processibility and heat resistance may optionally be present in an amount of 30 wt% or less, for example, 0.1 wt% to 20 wt%, relative to the total amount of the aromatic vinyl-based copolymer resin. Within this content range, the monomer can impart processibility and heat resistance to the resin composition without deteriorating other properties.

The aromatic vinyl-based copolymer resin may have a weight average molecular weight of 50,000 g/mol to 500,000 g/mol, without being limited thereto.

Examples of the rubber modified aromatic vinyl-based copolymer resin may include acrylonitrile-butadiene-styrene copolymer (ABS) resins, acrylonitrile-ethylene propylene rubber-styrene copolymer (AES) resins, acrylonitrile-acryl rubber-styrene copolymer (AAS) resins, and the like, without being limited thereto. Here, in the ABS resin, a copolymer (g-ABS) obtained by grafting a styrene monomer, which is an aromatic vinyl compound, and an acrylonitrile monomer, which is an unsaturated nitrile compound, to a core butadiene rubbery polymer is dispersed as the graft copolymer (B1) in a styrene-acrylonitrile (SAN) copolymer resin as the aromatic vinyl copolymer (B2).

Further, in the rubber modified aromatic vinyl-based copolymer resin, the graft copolymer resin may be present in an amount of 10 wt% to 100 wt%, preferably 15 wt% to 90 wt%, and the aromatic vinyl-based copolymer may be optionally present in an amount of 90 wt% or less, preferably 10 wt% to 85 wt%. Within this range, the resin composition can have an excellent balance between impact strength and mechanical properties.

The rubber modified aromatic vinyl-based copolymer resin may be present in an amount of 5 parts by weight to 30 parts by weight, for example, 10 parts by weight to 25 parts by weight, specifically, 15 parts by weight to 20 parts by weight, relative to 100 parts by weight of the polycarbonate resin. If the amount of the rubber modified aromatic vinyl-based copolymer resin is less than 5 parts by weight relative to 100 parts by weight of the polycarbonate resin, the resin composition has a possibility of deterioration in impact resistance, and when the amount of the rubber modified aromatic vinyl-based copolymer is greater than 30 parts by weight relative to 100 parts by weight of the polycarbonate resin, the

resin composition can suffer from deterioration of flame retardancy.

(C) Aromatic phosphoric acid ester compound

In the present invention, the aromatic phosphoric acid ester compound may be an aromatic phosphoric acid ester flame retardant used in a typical flame retardant thermoplastic resin composition, for example, an aromatic phosphoric acid ester compound represented by Formula 2:

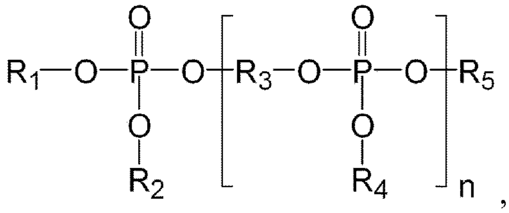

wherein $R_1$, $R_2$, $R_4$ and $R_5$ are each independently a hydrogen atom, a $C_6$ to $C_{20}$ aryl group, or a $C_1$ to $C_{10}$ alkyl group-substituted $C_6$ to $C_{20}$ aryl group; $R_3$ is a $C_6$ to $C_{20}$ arylene group or a $C_1$ to $C_{10}$ alkyl group-substituted $C_6$ to $C_{20}$ arylene group as derived from dialcohols such as resorcinol, hydroquinol, bisphenol-A, bisphenol-S, and the like; and n is an integer from 0 to 4.

Examples of the aromatic phosphoric acid ester compound represented by Formula 2 may include, in the case where n is 0, diarylphosphate, such as diphenylphosphate and the like, triphenylphosphate, tricresilphosphate, trixylenylphosphate, tri(2,6-dimethylphenyl)phosphate, tri(2,4,6-trimethylphenyl)phosphate, tri(2,4-ditertiarybutylphenyl)phosphate, tri(2,6-dimethylphenyl)phosphate, and the like, in the case where n is 1, resorcinol bis(diphenyl)phosphate, resorcinol bis(2,6-dimethylphenyl)phosphate, resorcinol bis(2,4-ditertiarybutylphenyl)phosphate, hydroquinol bis(2,6-dimethylphenyl)phosphate, hydroquinol bis(2,4-ditertiarybutylphenyl)phosphate, and the like. These aromatic phosphoric acid ester compounds may be used alone or as mixtures thereof

The aromatic phosphoric acid ester compound may be present in an amount of 10 parts by weight to 30 parts by weight, for example, 15 parts by weight to 25 parts by weight, relative to 100 parts by weight of the polycarbonate resin. If the amount of the aromatic phosphoric acid ester compound is less than 10 parts by weight relative to 100 parts by weight of the polycarbonate resin, the resin composition can suffer from deterioration in flame retardancy, and if the amount of the aromatic phosphoric acid ester compound exceeds 30 parts by weight, the resin composition can suffer from deterioration in stiffness.

(D) Fillers

In the present invention, the fillers includes wollastonite and talc, and may improve heat resistance, flame retardancy, and the like, without deteriorating stiffness such as flexural modulus, and the like.

Wollastonite is a white calcium-based acicular mineral. In the present invention, wollastonite may have an average particle diameter of 1 μm to 60 μm, for example, 3 μm to 40 μm, and an average aspect ratio of 6 or more, for example, 7 to 20. As used herein, the average aspect ratio of wollastonite refers to a ratio (a/b) of an average length (longer diameter) (a) to an average diameter (b) of wollastonite particles. Within this range, the fillers may improve heat resistance, flame retardancy, and the like without deteriorating stiffness such as flexural modulus.

Talc may be typical talc particles having a flake shape, an acicular shape, and the like.

The weight ratio of wollastonite to talc (wollastonite:talc) may be 1:0.1 to 0.5, for example, 1:0.2 to 0.4. If the weight ratio of wollastonite to talc (wollastonite:talc) is less than 1 : 0.1, the resin composition can suffer from deterioration of bending characteristics, and if the weight ratio of wollastonite to talc (wollastonite:talc) exceeds 1 : 0.5, the resin composition can suffer from deterioration of flexural modulus.

The fillers may be present in an amount of 5 parts by weight to 100 parts by weight, for example, 10 parts by weight to 90 parts by weight, relative to 100 parts by weight of the polycarbonate resin. If the amount of the fillers is less than 5 parts by weight relative to 100 parts by weight of the polycarbonate resin, the resin composition can suffer from deterioration of stiffness such as flexural modulus and the like, and if the amount of the fillers exceeds 100 parts by weight relative to 100 parts by weight of the polycarbonate resin, the resin composition can suffer from deterioration in impact resistance.

In one embodiment, the content ratio (C:D) of the aromatic phosphoric acid ester compound (C) to the fillers (D) may be 1 : 0.2 to 10, for example, 1 : 0.3 to 8. Within this range, the thermoplastic resin composition can have improved flame retardancy without deteriorating flexural modulus.

In addition to the above components, the flame retardant thermoplastic resin composition may further include

additives such as UV stabilizers, fluorescent brighteners, release agents, nucleating agents, inorganic additives, lubricants, antistatic agents, stabilizers, reinforcing agents, coloring agents such as pigments and dyes, and the like, as needed. Here, the inorganic additives do not include fillers such as wollastonite, talc, and the like. For example, the additives may be present in an amount of 0.1 parts by weight to 10 parts by weight relative to 100 parts by weight of the polycarbonate resin, without being limited thereto.

The UV stabilizers serve to suppress color change and deterioration of reflectivity of the resin composition due to UV irradiation, and may include, for example, benzotriazole, benzophenone, triazine, and the like.

The fluorescent brighteners serve to improve reflectivity of the polycarbonate resin, and may include, for example, stilbene-bisbenzoxazole derivatives such as 4-(benzoxazole-2-yl)-4'-(5-methylbenzoxazole-2-yl)-stilbene or 4,4'-bis(benzoxazole-2-yl)-stilbene, and the like.

In addition, the release agent may be selected from fluorine-containing polymers, silicone oil, metal salts of stearic acid, metal salts of montanic acid, montanic acid ester wax or polyethylene wax. The nucleating agent may be clay, and the inorganic additives may be glass fibers, silica, clay, calcium carbonate, calcium sulfate, glass beads, and the like, without being limited thereto.

According to the invention, the flame retardant thermoplastic resin composition exhibits excellent properties in term of all of stiffness such as flexural modulus and bending characteristics and flame retardancy. The flame retardant thermoplastic resin composition may have a flame retardancy level of V-0 or higher as measured on a specimen with a thickness of 1.2 mm in accordance with UL-94 vertical testing, a flexural modulus of 35,000 $kgf/cm^2$ to 55,000 $kgf/cm^2$, for example about, 40,000 $kgf/cm^2$ to 50,000 $kgf/cm^2$, as measured in accordance with ASTM D790, and a bending degree of 0.01 mm to 1 mm, for example, 0.02 mm to 0.8 mm, as measured on an 1/16" thick specimen having a size of 6 x 6 $inch^2$ at 25°C and 25% RH. Here, the bending degree can be obtained using an 1/8" thick specimen having a size of 6 x 6 $inch^2$, which is obtained by extrusion or injection molding of the flame retardant thermoplastic resin composition at 250°C, by measuring a height of one edge of the specimen separated from the ground, with the other three edges of the specimen secured to a planar plate at 25°C and 25% RH.

The flame retardant thermoplastic resin composition may be prepared in the form of pellets by mixing the above components and other additives, followed by melt extrusion in an extruder. Various molded articles may be produced using the prepared pellets through various molding methods, such as injection molding, extrusion, vacuum molding, cast molding, and the like.

Another aspect of the present invention relates to a molded article formed of the thermoplastic resin composition. Since the molded article exhibits excellent properties in terms of stiffness, flame retardancy, and the like, the molded article may be broadly applied to components of electric and electronic products, exterior materials, automobile parts, miscellaneous goods, structural materials, and the like.

Next, the present invention will be explained in more detail with reference to some examples. However, it should be understood that these examples are provided for illustration only and are not to be in any way construed as limiting the present invention.

## EXAMPLES

### Example 1

Details of components used in Examples and Comparative Examples are as follows:

(A) Polycarbonate resin
Bisphenol-A type polycarbonate having a weight average molecular weight (Mw) of 25,000 g/mol was used.
(B) Rubber modified aromatic vinyl-based copolymer resin
A resin prepared by kneading (B-1) 40 wt% of a styrene-based graft copolymer resin and (B-2) 60 wt% of a styrene-containing copolymer resin was used.
(B-1) Styrene-based graft copolymer resin (ABS graft copolymer resin)
With 50 parts by weight of butadiene rubber latex placed in a reactor, 36 parts by weight of styrene, 14 parts by weight of acrylonitrile and 150 parts by weight of deionized water in terms of solid content were added to the reactor. Then, relative to the total solid content, 1.0 part by weight of potassium oleate, 0.4 parts by weight of cumene hydroperoxide, 0.2 parts by weight of a mercaptan-based chain transfer agent, 0.4 parts by weight of glucose, 0.01 parts by weight of iron sulfate hydrate, and 0.3 parts by weight of pyrophosphate sodium salt were added to the reactor and reacted at 75°C for 5 hours, thereby preparing graft copolymer resin latex. 0.4 parts by weight of sulfuric acid was added to the resin latex to solidify the resin latex, thereby preparing styrene-based graft copolymer resin powder.
(B-2) Styrene-containing copolymer resin (SAN copolymer resin)
In a reactor, 72 parts by weight of styrene, 28 parts by weight of acrylonitrile, 120 parts by weight of deionized water,

0.2 parts by weight of azobisisobutyronitrile, 0.4 parts by weight of tri-calcium phosphate, and 0.2 parts by weight of mercaptan-based chain transfer agent were placed and heated from room temperature to 80°C for 90 minutes. Then, the reactor was maintained at this temperature for 240 minutes, thereby preparing a styrene-acrylonitrile copolymer resin (SAN) containing 25 wt% of acrylonitrile. The resin was washed with water, dehydrated, and dried, thereby preparing a styrene-containing copolymer resin powder. The styrene-containing copolymer resin has a weight average molecular weight of 180,000 g/mol to 200,000 g/mol.

(C) Aromatic phosphoric acid ester compound: Diarylphosphate (PX-200, DAIHACHI) was used.

(D) Fillers

(D-1) Wollastonite (Nyglos 12, NYCO Minerals) having an aspect ratio (a/b) of 10 and (D-2) flake talc (UPN HS-T 0.5, HAYASHI) were used.

**Examples 1 to 3 and Comparative Examples 1 to 9**

The respective components were introduced in amounts as listed in Table 1 into a twin-screw melt-extruder at 240°C to 280°C, followed by melting and kneading, thereby preparing a resin composition in a chip state. The prepared chips were dried at 80°C for 5 hours or more, followed by preparing specimens for measurement of flame retardancy and mechanical properties using a screw-type injector at 240°C to 280°C. The prepared specimens were evaluated as to the following properties, and results are shown in Table 1.

**Measurement of properties**

(1) Flame retardancy: 1.5 mm thick and 1.2 mm thick specimens were prepared to evaluate flame retardancy in accordance with a UL-94 vertical testing method.

(2) Vicat softening temperature (VST): VST was measured under a load of 5 kgf in accordance with ASTM D1525 (unit: °C).

(3) Izod impact strength: A notch was formed on a 3.2 mm thick Izod specimen to measure impact strength in accordance with ASTM D256 (unit: kgf·cm/cm).

(4) Flexural modulus: A 6.4 mm thick specimen was prepared for measurement of flexible modulus in accordance with ASTM D790 (unit: $kgf/cm^2$).

(5) Bending degree: An 1/8" thick specimen having a size of 6 x 6 $inch^2$ was prepared by extrusion or injection molding of the flame retardant thermoplastic resin composition at 250°C. Then, with three edges of the specimen secured to a planar plate at 25°C and 25% RH, the height of one edge of the specimen separated from the ground was measured (unit: mm).

**TABLE 1**

| | Example | | | Comparative Example | | | | | | | |
|---|---|---|---|---|---|---|---|---|---|---|---|
| | 1 | 2 | 3 | 1 | 2 | 3 | 4 | 5 | 6 | 7 | 8 |
| (A) | 100 | 100 | 100 | 100 | 100 | 100 | 100 | 100 | 100 | 100 | 100 |
| (B) | 15 | 15 | 20 | - | 50 | 15 | 15 | 15 | 15 | 15 | 15 |
| (C) | 20 | 20 | 20 | 20 | 20 | 5 | 50 | 20 | 20 | 20 | 20 |
| (D-1) | 20 | 45 | 45 | 45 | 45 | 45 | 45 | - | 120 | - | 10 |
| (D-2) | 5 | 10 | 10 | 10 | 10 | 10 | 10 | - | - | 25 | 30 |
| Flame retardancy (1.5mm) | V-0 | V-0 | V-0 | V-0 | Fail | Fail | V-0 | V-0 | V-0 | V-0 | V-0 |
| Flame retardancy (1.2mm) | V-0 | V-0 | V-0 | V-0 | Fail | Fail | V-0 | Fail | V-0 | V-0 | V-0 |
| VST | 97 | 98 | 97 | 107 | 86 | 110 | 81 | 100 | 105 | 92 | 90 |
| Impact strength | 15 | 12 | 13 | 3 | 19 | 18 | 4 | 9 | 2 | 8 | 4 |
| Flexural modulus | 42,000 | 44,000 | 41,000 | 48,500 | 33,000 | 32,000 | 40,000 | 29,000 | 55,000 | 34,000 | 34,000 |
| Bending degree | 0.2 | 0.5 | 0.5 | 1.4 | 1.1 | 1.2 | 1.3 | 0.2 | 1.5 | 0.5 | 0.6 |
| Unit: parts by weight | | | | | | | | | | | |

From the results show in Table 1, it can be seen that the flame retardant thermoplastic resin compositions prepared in Examples 1 to 3 exhibit excellent properties in terms of stiffness such as flexural modulus and bending characteristics, impact resistance, heat resistance, and flame retardancy.

On the other hand, in Comparative Example 1 wherein the (B) rubber-modified styrene copolymer was not used, Comparative Example 4 wherein an excess of the (C) aromatic phosphoric acid ester compound was used, and Comparative Example 6 wherein an excess of (D-1) wollastonite was used alone as the (D) fillers, the thermoplastic resin compositions suffered deterioration in impact resistance. Further, in Comparative Example 2 wherein an excess of the (B) rubber-modified styrene copolymer was used and in Comparative Example 3 wherein a small amount of the (C) aromatic phosphoric acid ester compound was used, the thermoplastic resin compositions suffered deterioration flame retardancy. Further, in Comparative Example 5 wherein the (D) fillers were not used, the thermoplastic resin compositions suffered deterioration in flame retardancy and stiffness, and in Comparative Example 7 wherein (D-2) talc was used alone as the (D) fillers, the thermoplastic resin compositions suffered deterioration in heat resistance and flexural modulus. Further, in Comparative Example 8 wherein an excess of (D-2) talc was used relative to (D-1) wollastonite as the (D) fillers, the thermoplastic resin compositions suffered deterioration in flexural modulus.

It should be understood that various modifications, changes, alterations, and equivalent embodiments can be made by those skilled in the art without departing from the spirit and scope of the invention.

## Claims

1. A flame retardant thermoplastic resin composition comprising:

   100 parts by weight of a polycarbonate resin;
   5 parts by weight to 30 parts by weight of a rubber modified aromatic vinyl-based copolymer resin;
   10 parts by weight to 30 parts by weight of an aromatic phosphoric acid ester compound; and
   5 parts by weight to 100 parts by weight of fillers comprising wollastonite and talc,
   wherein a weight ratio of wollastonite to talc ranges from 1:0.1 to 0.5.

2. The flame retardant thermoplastic resin composition according to claim 1, wherein the rubber modified aromatic vinyl group graft copolymer resin comprises:

   10 wt% to 100 wt% of a graft copolymer resin, the graft copolymer resin comprising 5 wt% to 65 wt% of a rubbery polymer, 15 wt% to 94 wt% of an aromatic vinyl-based monomer, and 1 wt% to 50 wt% of a monomer copolymerizable with the aromatic vinyl-based monomer; and
   optionally, 90 wt% or less of an aromatic vinyl-based copolymer resin, the aromatic vinyl-based copolymer resin comprising 50 wt% to 95 wt% of an aromatic vinyl-based monomer, and 5 wt% to 50 wt% of a monomer copolymerizable with the aromatic vinyl-based monomer.

3. The flame retardant thermoplastic resin composition according to claim 1 or 2, wherein the rubber-modified aromatic vinyl-based copolymer resin comprises at least one selected from among acrylonitrile-butadiene-styrene copolymer resin (ABS resin), acrylonitrile-ethylene propylene rubber-styrene copolymer resin (AES resin), or acrylonitrile-acryl rubber-styrene copolymer resin (AAS resin).

4. The flame retardant thermoplastic resin composition according to any of claims 1 to 3, wherein the aromatic phosphoric acid ester compound is represented by Formula 2:

   [Formula 2]

   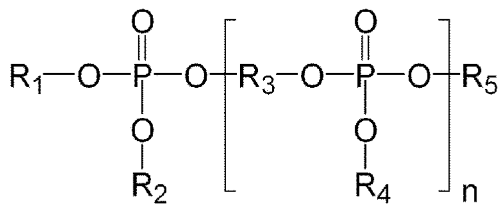

   wherein $R_1$, $R_2$, $R_4$ and $R_5$ are each independently a hydrogen atom, a $C_6$ to $C_{20}$ aryl group, or a $C_1$ to $C_{10}$ alkyl group-substituted $C_6$ to $C_{20}$ aryl group; $R_3$ is a $C_6$ to $C_{20}$ arylene group or a $C_1$ to $C_{10}$ alkyl group-substituted $C_6$ to

$C_{20}$ arylene group; and n is an integer from 0 to 4.

**5.** The flame retardant thermoplastic resin composition according to any of claims 1 to 4, wherein a weight ratio of the aromatic phosphoric acid ester compound to the fillers ranges from 1:0.2 to 10.

**6.** The flame retardant thermoplastic resin composition according to any of claims 1 to 5, further comprising: at least one selected from among UV stabilizers, fluorescent brighteners, release agents, nucleating agents, inorganic additives, lubricants, antistatic agents, stabilizers, reinforcing agents, pigments, or dyes.

**7.** The flame retardant thermoplastic resin composition according to any of claims 1 to 6, wherein the flame retardant thermoplastic resin composition has a flame retardancy of V-0 or more as measured in accordance with UL-94 vertical testing, a flexural modulus from 3.432 GPa to 5.394 GPa (35,000 $kgf/cm^2$ to 55,000 $kgf/cm^2$) as measured in accordance with ASTM D790, and a bending degree of 0.01 mm to 1 mm as measured on a specimen obtained by molding the flame retardant thermoplastic resin composition and having a size of 15.24 x 15.24 $cm^2$ (6x6 $in^2$) and a thickness of 3.2 mm (1/8") at 25°C and 25% RH.

**8.** A molded article obtainable from the flame retardant thermoplastic resin composition according to claim 1.

## Patentansprüche

**1.** Flammfeste thermoplastische Harzzusammensetzung, umfassend:

100 Gewichtsteile eines Polycarbonatharzes;
5 Gewichtsteile bis 30 Gewichtsteile eines kautschukmodifizierten Copolymer-Harzes auf aromatischer Vinylbasis;
10 Gewichtsteile bis 30 Gewichtsteile einer aromatischen Phosphorsäureesterverbindung; und
5 Gewichtsteile bis 100 Gewichtsteile an Füllstoffen, die Wollastonit und Talk umfassen,
wobei ein Gewichtsverhältnis von Wollastonit zu Talk von 1:0,1 bis 0,5 reicht.

**2.** Flammfeste thermoplastische Harzzusammensetzung gemäß Anspruch 1, wobei das kautschukmodifizierte Pfropf-Copolymer-Harz mit aromatischer Vinylgruppe umfasst:

10 Gew.-% bis 100 Gew.-% eines Pfropf-Copolymer-Harzes, wobei das Pfropf-Copolymer-Harz 5 Gew.-% bis 65 Gew.-% eines kautschukartigen Polymers, 15 Gew.-% bis 94 Gew.-% eines Monomers auf aromatischer Vinylbasis, und 1 Gew.-% bis 50 Gew.-% eines mit dem Monomer auf aromatischer Vinylbasis copolymerisierbaren Monomers umfasst; und
wahlweise 90 Gew.-% oder weniger eines Copolymer-Harzes auf aromatischer Vinylbasis, wobei das Copolymer-Harz auf aromatischer Vinylbasis 50 Gew.-% bis 95 Gew.-% eines Monomers auf aromatischer Vinylbasis und 5 Gew.-% bis 50 Gew.-% eines mit dem Monomer auf aromatischer Vinylbasis copolymerisierbaren Monomers umfasst.

**3.** Flammfeste thermoplastische Harzzusammensetzung gemäß Anspruch 1 oder 2, wobei das kautschukmodifizierte Copolymer-Harz auf aromatischer Vinylbasis wenigstens eines umfasst, ausgewählt aus Acrylnitril-Butadien-StyrolCopolymer-Harz (ABS-Harz), Acrylnitril-Ethylen-Propylen-Kautschuk-StyrolCopolymer-Harz (AES-Harz), oder Acrylnitril-Acrylkautschuk-Styrol-Copolymer-Harz (AAS-Harz).

**4.** Flammfeste thermoplastische Harzzusammensetzung gemäß irgendeinem der Ansprüche 1 bis 3, wobei die aromatische Phosphorsäureesterverbindung durch Formel 2 dargestellt wird:

[Formel 2]

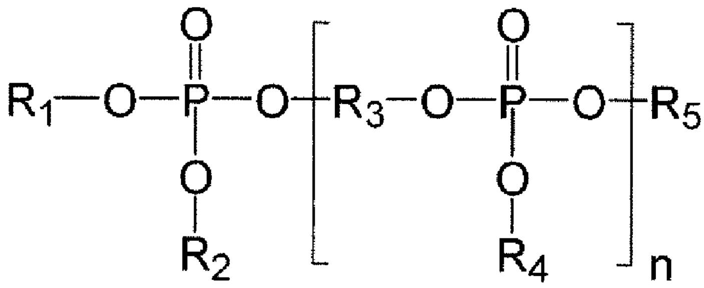

wobei $R_1$, $R_2$, $R_4$ und $R_5$ jeweils unabhängig ein Wasserstoffatom, eine $C_6$- bis $C_{20}$-Arylgruppe oder eine mit einer $C_1$- bis $C_{10}$-Alkylgruppe substituierte $C_6$- bis $C_{20}$-Arylgruppe sind; $R_3$ eine $C_6$- bis $C_{20}$-Arylengruppe oder eine mit einer $C_1$-bis $C_{10}$-Alkylgruppe substituierte $C_6$- bis $C_{20}$-Arylengruppe ist; und n eine ganze Zahl von 0 bis 4 ist.

**5.** Flammfeste thermoplastische Harzzusammensetzung gemäß irgendeinem der Ansprüche 1 bis 4, wobei ein Gewichtsverhältnis der aromatischen Phosphorsäureesterverbindung zu den Füllstoffen von 1:0,2 bis 10 reicht.

**6.** Flammfeste thermoplastische Harzzusammensetzung gemäß irgendeinem der Ansprüche 1 bis 5, weiterhin umfassend: wenigstens eines ausgewählt aus UV-Stabilisatoren, fluoreszierenden Aufhellern, Formtrennungsmitteln, Nukleierungsmitteln, anorganischen Additiven, Schmier- bzw. Gleitmitteln, antistatischen Mitteln, Stabilisatoren, Verstärkungsmitteln, Pigmenten oder Farbstoffen.

**7.** Flammfeste thermoplastische Harzzusammensetzung gemäß irgendeinem der Ansprüche 1 bis 6, wobei die flammfeste thermoplastische Harzzusammensetzung eine Flammwidrigkeit von V-0 oder mehr wie gemessen gemäß UL-94-Vertikal-Test, ein Biegemodul von 3,432 GPa bis 5,394 GPa (35.000 kgf/$cm^2$ bis 55.000 kgf/$cm^2$) wie gemessen gemäß ASTM D 790, und ein Biegeausmaß von 0,01 mm bis 1 mm wie gemessen an einer Probe erhalten durch Formen der flammfesten thermoplastischen Harzzusammensetzung und mit einer Größe von 15,24 x 15,24 $cm^2$ (6 x 6 $in^2$) und einer Dicke von 3,2 mm (1/8") bei 25°C und 25% relativer Feuchte, aufweist.

**8.** Formgegenstand, erhältlich aus der flammfesten thermoplastischen Harzzusammensetzung gemäß Anspruch 1.

**Revendications**

**1.** Composition de résine thermoplastique retardatrice de flamme, comprenant :

100 parties en poids d'une résine de polycarbonate ;
5 parties en poids à 30 parties en poids d'une résine d'un copolymère à base vinylaromatique modifié par un caoutchouc ;
10 parties en poids à 30 parties en poids d'un composé d'un ester d'acide phosphorique aromatique ; et
5 parties en poids à 100 parties en poids de charges comprenant de la wollastonite et du talc,
dans laquelle le rapport en poids de la wollastonite au talc est compris dans la plage de 1:0,1 à 0,5.

**2.** Composition de résine thermoplastique retardatrice de flamme selon la revendication 1, dans laquelle la résine d'un copolymère greffé par des groupes vinylaromatiques modifié par un caoutchouc comprend :

10 % en poids à 100 % en poids d'une résine d'un copolymère greffé, la résine d'un copolymère greffé comprenant 5 % en poids à 65 % en poids d'un polymère caoutchouteux, 15 % en poids à 94 % en poids d'un monomère à base vinylaromatique, et 1 % en poids à 50 % en poids d'un monomère copolymérisable avec le monomère à base vinylaromatique ; et
en option, 90 % en poids ou moins d'une résine d'un copolymère à base vinylaromatique, la résine d'un copolymère à base vinylaromatique comprenant 50 % en poids à 95 % en poids d'un monomère à base vinylaromatique, et 5 % en poids à 50 % en poids d'un monomère copolymérisable avec le monomère à base vinylaromatique.

**3.** Composition de résine thermoplastique retardatrice de flamme selon la revendication 1 ou 2, dans laquelle la résine d'un copolymère à base vinylaromatique modifié par un caoutchouc comprend au moins l'une choisie parmi une résine d'un copolymère acrylonitrile-butadiène-styrène (résine ABS), d'une résine d'un copolymère acrylonitrile-caoutchouc éthylène/propylène-styrène (résine AES) ou d'une résine d'un copolymère acrylonitrile-caoutchouc acrylique-styrène (résine AAS).

**4.** Composition de résine thermoplastique retardatrice de flamme selon l'une quelconque des revendications 1 à 3, dans laquelle le composé ester d'acide phosphorique aromatique est représenté par la formule 2 :

[Formule 2]

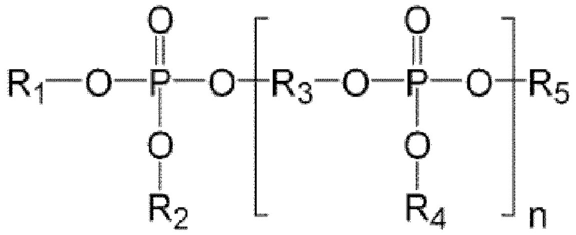

dans laquelle $R_1$, $R_2$, $R_4$ et $R_5$ représentent chacun d'une manière indépendante un atome d'hydrogène, un groupe aryle en $C_6$ à $C_{20}$ ou un groupe aryle en $C_6$ à $C_{20}$ substitué par un ou des groupes alkyle en $C_1$ à $C_{10}$ ; $R_3$ est un groupe arylène en $C_6$ à $C_{20}$ ou un groupe arylène en $C_6$ à $C_{20}$ substitué par un ou plusieurs groupes alkyle en $C_1$ à $C_{10}$ ; et n est un entier de 0 à 4.

**5.** Composition de résine thermoplastique retardatrice de flamme selon l'une quelconque des revendications 1 à 4, dans laquelle le rapport en poids du composé ester d'acide phosphorique aromatique aux charges est compris dans la plage de 1:0,2 à 10.

**6.** Composition de résine thermoplastique retardatrice de flamme selon l'une quelconque des revendications 1 à 5, comprenant en outre au moins l'un choisi parmi les stabilisants UV, les azurants fluorescents, les agents de démoulage, les agents de nucléation, les additifs inorganiques, les lubrifiants, les agents antistatiques, les stabilisants, les renforts, les pigments ou les colorants.

**7.** Composition de résine thermoplastique retardatrice de flamme selon l'une quelconque des revendications 1 à 6, dans laquelle la composition de résine thermoplastique retardatrice de flamme a une inflammabilité de V-0 ou plus, telle que mesurée par l'essai avec combustion verticale UL-94, un module d'élasticité en flexion de 3,432 GPa à 5,394 GPa (35 000 $kgf/cm^2$ à 55 000 $kgf/cm^2$), tel que mesuré selon ASTM D790, et un degré de flexion de 0,01 mm à 1 mm, tel que mesuré sur une éprouvette obtenue par moulage de la composition de résine thermoplastique retardatrice de flamme et ayant les dimensions 15,24 x 15,24 $cm^2$ (6 x 6 $in^2$) et une épaisseur de 3,2 mm (1/8") à 25 °C et pour une humidité relative de 25 %.

**8.** Article moulé pouvant être obtenu à partir de la composition de résine thermoplastique retardatrice de flamme selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020040093380 A
- JP 2007308529 A
- JP 2006342199 A
- JP 2007269821 A